# EUROPÄISCHE PATENTSCHRIFT

(11) **EP 1 367 498 B1**
(45) Veröffentlichungstag und Bekanntmachung des Hinweises auf die Patenterteilung: **17.08.2016**
(21) Anmeldenummer: 03011846.7
(22) Anmeldetag: 26.05.2003
(51) Int. Cl.: G06F 13/42, H04L 12/403, H04L 12/40

(54) **Verfahren und Vorrichtung zur seriellen Datenübertragung**
Method and device for serial data transfer
Dispositif et méthode de transfert série de données

(30) Priorität: 31.05.2002 DE 10224311
(43) Veröffentlichungstag der Anmeldung: 03.12.2003
(73) Patentinhaber: Siemens Aktiengesellschaft, 80333 München (DE)
(72) Erfinder: Fritsch, Andreas, 92245 Kümmersbruck (DE); Prölss, Manfred, 92263 Ebermannsdorf (DE); Schütz, Bastian, 91088 Bubenreuth (DE)

(56) Entgegenhaltungen:
- EP-A2- 0 631 239
- DE-A1- 19 756 564
- DE-C1- 19 906 867

## Beschreibung

Die Erfindung bezieht sich auf ein Verfahren und eine Vorrichtung zur seriellen Datenübertragung zwischen einem Basismodul und zumindest eines Erweiterungsmodul gemäß Patentanspruch 1 bzw. Patentanspruch 5.

Ein derartiges Verfahren und eine zugehörige Vorrichtung zur seriellen Datenübertragung dienen beispielsweise zur Kommunikation zwischen einem Grundgerät, insbesondere einem Überlastschutzgerät mit Steuerfunktion, und an diesem anordbaren Zusatzgeräte, wie beispielsweise einem Stromerfassungs-, einem Spannungsüberwachungs-, einem Bedien- und/oder einem Anzeigebaustein.

Aus DE 197 56 564 A1 ist ein Nachrichtennetz mit automatischer Knotenkonfiguration bekannt, das einen Masterknoten und eine Mehrzahl an Slaveknoten umfasst, die untereinander über einen Gemeinschaftsbus miteinander verbunden sind. Eine Kommunikation zwischen den einzelnen Knoten erfolgt unter Verwendung eines Kommunikationsprotokolls, wie beispielsweise dem CAN Protocol. Ferner sind jeweils zwei benachbarte Knoten über eine separate Verbindung miteinander gekoppelt, die eine sogenannte Daisy-Chain bilden. Bei der Konfiguration des Nachrichtennetzes werden zyklisch Bezeichner an die Slaveknoten gesendet, wobei die Bezeichner durch einen Zähler in jedem Durchlauf inkrementell erhöht werden. Jeder Slaveknoten meldet den Erhalt seines Bezeichners an den Masterknoten zurück. Hierdurch werden Bezeichner vom Masterknoten zeitlich gestaffelt an die Slaveknoten vergeben.

EP 0 631 239 A2 offenbart ein Verfahren und eine Vorrichtung zu einer seriellen Datenübertragung zwischen einer Mehrzahl an Mikrocomputern. In der Vorrichtung bildet ein Mikrocomputer einen Controller und die weiteren Mikrocomputer jeweils ein Ziel. Die Mikrocomputer sind untereinander über eine Datenleitung, eine Taktleitung und eine Steuerleitung miteinander verbunden. Der als Controller dienende Mikrocomputer sendet ein Taktsignal über die Taktleitung an die übrigen Mikrocomputer. Die Datenleitung und die Steuerleitung sind zu einer bidirektionalen Kommunikation zwischen den Mikrocomputern ausgelegt.

Der Erfindung liegt die Aufgabe zugrunde, ein Verfahren bzw. eine Vorrichtung anzugeben, wobei mit einfachen und kostengünstigen Mitteln eine serielle Datenübertragung zwischen einem Basismodul und zumindest einem Erweiterungsmodul und Erkennung desselben erzielt werden soll.

Diese Aufgabe wird erfindungsgemäß hinsichtlich des Verfahrens durch die Merkmale des Patentanspruchs 1 bzw. hinsichtlich der Vorrichtung durch die Merkmale des Patentanspruchs 5 gelöst; vorteilhafte Ausgestaltungen hinsichtlich des Verfahrens sind Gegenstand der Unteransprüche 2 bis 4 und hinsichtlich der Vorrichtung Gegenstand der Unteransprüche 6 und 7.

Mit diesem Verfahren bzw. mit dieser Vorrichtung wird mittels einer Prozedur ein zwangsläufiger gegenseitiger Datenaustausch im Sinne eines Schieberegisters erreicht; hierbei können die Erweiterungsmodule adressierungsfrei und demnach aufwandsreduziert identifiziert werden.

Die Erfindung sowie vorteilhafte Ausgestaltungen gemäß Merkmalen der Unteransprüche werden im Folgenden anhand in der Zeichnung schematisch dargestellter Ausführungsbeispiele näher erläutert; darin zeigen:
- FIG 1: eine Vorrichtung zur seriellen Datenübertragung von beispielsweise Modulerkennungs-Bytes, Modulkennungs-Bytes, Datenpaketen sowie Rückkopplungssignalen zwischen einem Basismodul, einem ersten und einem zweiten Erweiterungsmodul; und
- FIG 2: einen Aufbau eines Datenpaketes für eine serielle periphere Schnittstelle.

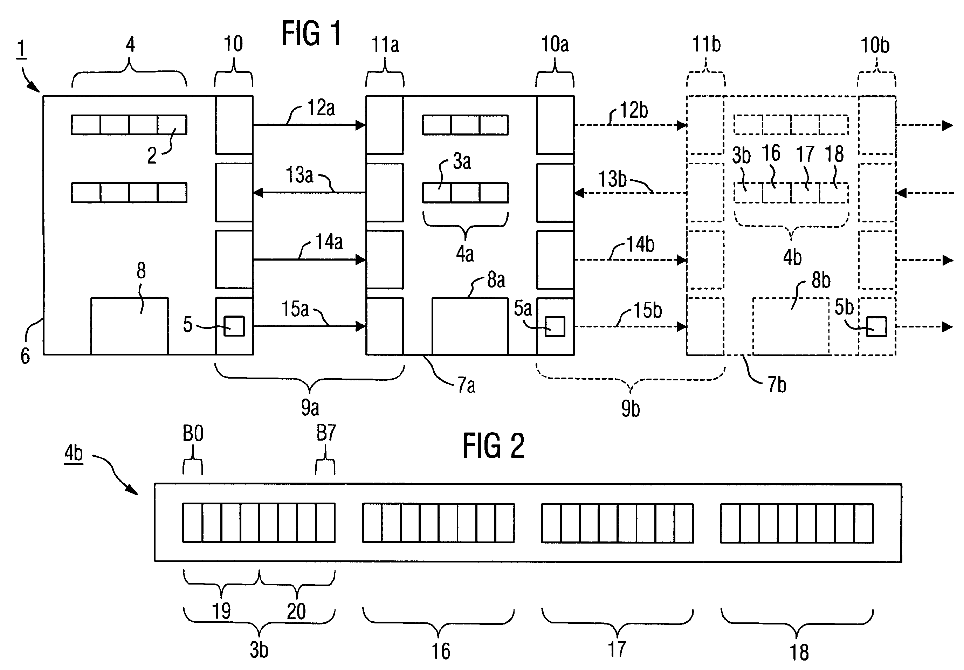

In FIG 1 ist eine Vorrichtung 1 gezeigt, welche für die Durchführung eines Verfahrens zur seriellen Datenübertragung von beispielsweise einem Modulerkennungs-Byte (Dummy-Byte) 2, einem Modulkennungs-Byte (Modul-ID-Byte) 3a,3b, einem Datenpaket 4,4a,4b sowie einem Rückkopplungssignal 5,5a,5b zwischen einem Basismodul 6 und zumindest einem Erweiterungsmodul 7a sowie ggf. einem weiteren Erweiterungsmodul 7b vorgesehen ist. Die Erweiterungsmodule 7a,7b weisen hierbei jeweils einen integrierten Schaltkreis 8,8a,8b, insbesondere eine Mikrosteuerung/-Regelung (microcontroller) bzw. im speziellen einen Prozessor auf. Der integrierte Schaltkreis 8,8a,8b, insbesondere die Mikrosteuerung/-regelung (microcontroller) hat neben der Funktion einer Systemschnittstelle weitere Funktionen in den Erweiterungsmodulen 7a,7b, wie beispielsweise eine Vorverarbeitung von Daten. Dazu zählen unter anderem eine Widerstandsmessung und eine daraus berechen- und erstellbare Kennlinie.

Aus der Systematik der Anordnung, der in Serie mit dem Basismodul 6 verschalteten, vorgenannten Erweiterungsmodulen 7a bzw. 7b, ergibt sich ein einfach erweiterbares Kommunikationssystem mit insbesondere 15 Erweiterungsmodulen. Bedingt durch diesen seriellen Aufbau erübrigt sich vorteilhafterweise der Einsatz von Mitteln zur Kommunikationssteuerung und zur Verhinderung von Kommunikationskollisionen.

Die Vorrichtung 1 weist hierbei eine oder mehrere Schnittstellen 9a,9b auf, die das Basismodul 6 und das eine Erweitungsmodul 7a in Serie verbindet und gleichermaßen zwischen dem einen Erweiterungsmodul 7a und dem weiteren Erweitungsmodul 7b angeordnet ist. Die Schnittstellen 9a,9b - auch als Datenschnittstellen bezeichnet - umfassen jeweils einen aktiven Kommunikationsteilnehmer (master) 10,10a,10b und einen zugehörigen passiven Kommunikationsteilnehmer (slave) 11a, 11b. Die Schnittstellen 9a,9b weisen jeweils für sich oder gemeinsam eine serielle periphere Schnittstelle (serial peripheral interface = SPI) auf. Durch eine einfache Emulation für die Schnittstellen 9a,9b wird das Verfahren auf integrierten Schaltkreisen 8,8a,8b ohne oder mit nur einer seriellen peripheren Schnittstelle (serial peripheral interface = SPI) eingesetzt.

Die aktiven Kommunikationsteilnehmer (master) 10,10a,10b weisen jeweils einen Anschluss für eine serielle Datenausgabe (serial data out) auf, die mit je einer Sendeleitung 12a,12b auf einen Anschluss zur seriellen Datenaufnahme (serial data in) der passiven Kommunikationsteilnehmer (slave) 11a, 11b führen. Die passiven Kommunikationsteilnehmer (slave) 11a,11b sind ihrerseits ebenfalls mit jeweils einem Anschluss für eine serielle Datenausgabe ausgerüstet, die über je eine Empfangsleitung 13a,13b mit je einem Anschluss für eine serielle Datenaufnahme verbunden sind. Weiterhin führt jeweils über einen entsprechenden Anschluss (shift clock bzw. latch clock) eine Taktleitung 14a,14b bzw. eine Steuerleitung 15a,15b von den aktiven Kommunikationsteilnehmern (master) 10,10a,10b zu den passiven Kommunikationsteilnehmern (slave) 11a,11b.

Die jeweilige Sendeleitung 12a,12b dient hierbei zur Übertragung von Modulerkennungs-Bytes (Dummy-Byte) 2 sowie von Datenpaketen 4, wobei die jeweilige Empfangsleitung 13a,13b zur Übertragung von Modulkennungs-Byte 3a,3b und von Datenpaketen 4a,4b eingesetzt wird. Die jeweilige Taktleitung 14a,14b wird zur Übertragung der Zyklen und die jeweilige Steuerleitung 15a,15b zur Übertragung des jeweiligen Rückkopplungssignals 5,5a,5b der Datenübernahme genutzt; die Auswahlfunktion für einen integrierten Schaltkreis (chip-selection) kann hier vorteilhafterweise eingespart werden. Die derart aufgebaute synchrone Schnittstelle 9a,9b ist aufgrund der Taktleitung 14a,14b demnach nicht an eine starre Baudrate gebunden, sondern verfügt vielmehr über eine skalierbare Dynamik. Nach jedem Erweiterungsmodul 7a,7b wird die jeweilige Schnittstelle 9a,9b abgesetzt, so dass ein an dem Anschluss für die Datenaufnahme abgeschwächt ankommendes Signal eine Regeneration im Erweiterungsmodul 7a,7b selbst erfährt.

Das mittels der Vorrichtung 1 anwendbare Verfahren zur seriellen Datenübertragung zwischen dem Basismodul 6 und zumindest einem Erweiterungsmodul 7a sieht vor, dass in zumindest einem Übertragungszyklus von dem Basismodul 6 ein Modulerkennungs-Byte (Dummy-Byte) 2 an das eine Erweitungsmodul 7a und von diesem ein Modulkennungs-Byte 3a im Sinne eines Schieberegisters an das Basismodul 6 gesendet wird. Alternativ kann dieser Verfahrensschritt aus Redundanzgründen wiederholt werden. Anschließend wird durch ein Rückkopplungssignal 5 von dem Basismodul 6 an das eine Erweiterungsmodul 7a das Ende des einen Übertragungszyklus übermittelt. Weiterhin werden in einem weiteren Übertragungszyklus Datenpakete 4,4a von dem Basismodul 6 an das eine Erweiterungsmodul 7a und umgekehrt übertragen. Schließlich wird durch ein weiteres Rückkopplungssignal 5a von dem Basismodul 6 an das eine Erweiterungsmodul 7a das Ende des weiteren Übertragungszyklus übermittelt.

Während der Übertragungszyklen werden die Datenpakete 4 von dem Basismodul 6 an das eine bzw. an das weitere Erweiterungsmodul 7a bzw. 7b in einer invertierten Reihenfolge zu den Datenpaketen 4a,4b von dem einen bzw. dem weiteren Erweiterungsmodul 7a,7b an das Basismodul 6 gesendet.

Sofern mehr als ein Erweiterungsmodul über die jeweils durchgängig in Serie angeordneten vier Leitungen 12a bis 15b vorgesehen werden sollen, läuft das Verfahren derart ab, dass in einem Übertragungszyklus von dem Basismodul 6 ein Modulerkennungs-Byte (Dummy-Byte) 2 an das eine Erweitungsmodul 7a und von diesem ein Modulkennungs-Byte 3a im Sinne eines Schieberegisters an das Basismodul 6 gesendet wird. Dann wird durch ein Rückkopplungssignal 5 von dem Basismodul 6 an das eine Erweiterungsmodul 7a das Ende des einen Übertragungszyklus übermittelt. Anschließend wird in einem weiteren Übertragungszyklus von dem Basismodul 6 ein weiteres Modulerkennungs-Byte (Dummy-Byte) 2 an ein weiteres Erweiterungsmodul 7b und von diesem ein weiteres Modulkennungs-Byte 3b im Sinne eines Schieberegisters an das Basismodul 6 gesendet, wobei Datenpakete 4,4a von dem Basismodul 6 an das eine Erweiterungsmodul 7a und umgekehrt übertragen werden. Abschließend wird durch ein weiteres Rückkopplungssignal 5a von dem Basismodul 6 an das eine Erweiterungsmodul 7a und von diesem an das weitere Erweiterungsmodul 7b das Ende des weiteren Übertragungszyklus übermittelt.

Das Datenpaket 4b setzt sich beispielsweise aus einem Modulkennungs-Byte (Modul-ID-Byte) 3b, einem ersten Daten-Byte 16, einem zweiten Daten-Byte 17 und einem Prüfsummen-Byte 18 gemäß FIG 1 bzw. FIG 2 zusammen. Das erste Daten-Byte 16 und das zweite Daten-Byte 17 werden auch als Nutzdaten-Bytes bezeichnet. Die Summe dieser Bytes steht für eine definierte Datenbreite eines Moduls, die in Sende- und Empfangsrichtung gleich groß ist. Bei einem Modul mit beispielsweise zwei Nutzdaten-Bytes, also dem ersten Daten-Byte 16 und dem zweiten Daten-Byte 17, steht für die Datenbreite der Wert 4, da ein Modulkennungs-Byte 3b und ein Prüfsummen-Byte 18 hinzugefügt werden.

In FIG 2 ist beispielsweise die Untergliederung des Datenpaketes 4b gezeigt. Hierbei ist das Modulkennungs-Byte 3b derart aufgebaut, dass dessen erstes bis viertes Bit B0 bis B3 die Modulidentifizierung darstellt. Eine Wiederholung der Modulidentifizierung ist durch das fünfte bis achte Bit B4 bis B7 gegeben. Die beiden darauffolgenden Nutzdaten-Bytes in Form des ersten Daten-Bytes 16 und des zweiten Daten-Bytes 17 sind beliebig setzbar. Die modulunabhängigen Daten sind durch die ersten vier Bits des Daten-Bytes 16 abgebildet, wobei die modulspezifischen Daten auf die letzten vier Bits des ersten Daten-Bytes 16 und auf alle acht Bits des zweiten Daten-Bytes 17 gerichtet sind. Letztlich sind alle acht Bits des Prüfsummen-Bytes 18 belegt, um eine Überprüfung der fehlerfreien Datenübertragung, beispielsweise mittels eines XOR-Bausteins, durchführen zu können. Der Aufbau des Datenpaketes 4 und des Basismoduls 6 unterscheidet sich lediglich dadurch, dass anstelle der jeweiligen Modulkennungs-Byte (Modul-ID-Byte) 3a,3b ein Modulerkennungs-Byte (Dummy-Byte) 2 vorgesehen ist.

Jede Modulart, wie beispielsweise ein Stromerfassungs-, ein Spannungsüberwachungs-, ein Bedien- und/oder ein Anzeigemodul, erhält eine fest zugeordnete Modulkennung (Modul-ID) und eine spezifische Datenbreite. Da die Möglichkeit besteht, mehrere identische Module anzuschließen, erfolgt die Identifikation derselben mit Hilfe der jeweiligen Modulkennung (Modul-ID) und dem jeweiligen Steckplatz. Zur Kommunikation werden die Datenpakete 4,4a,4b wie in einem Schieberegister durch alle angeschlossenen Module geschoben.

Sofern die Datenpakete 4,4a,4b ihren Bestimmungsort - Speicherzelle in einem Erweiterungsmodul - erreicht haben, wird von dem Basismodul 6 das Rückkopplungssignal 5 gesetzt. Die Erweiterungsmodule 7a,7b reagieren hierauf mit der Übernahme der empfangenen Datenpakete 4 und mit einer Aktualisierung des jeweiligen integrierten Sendedatenpuffer. Damit das Basismodul 6 die Übernahme und Aktualisierung der Datenpakete 4a,4b mittels dem Rückkopplungssignal 5 steuern kann, muss dieses die Datenbreite der verschiedenen Erweiterungsmodule 7a,7b kennen. Dazu sind im Basismodul 6 in einer Liste, Tabelle od.dgl. hinterlegt, welches Erweiterungsmodul für welche Datenpaketlänge vorgesehen ist; abhängig davon wird ein entsprechend langes Datenpaket 4 gesendet. Nach dem Einschalten des Basismoduls 6 erkennt dieses automatisch - im Sinne einer Selbstinitialisierung - die angeschlossenen Erweiterungsmodule 7a,7b und speichert die jeweilige Modulkennung (Modul-ID) in einer sogenannten Ausbauliste.

Da die Kommunikation ausschließlich in beide Richtungen, beispielsweise von dem Basismodul 6 zu dem einen Erweiterungsmodul 7a im Sinne einer Vollduplex-Kommunikation, stattfindet, versendet das Basismodul 6 nach dem Einschalten zuerst ein Modulerkennungs-Byte (Dummy-Byte) 2 an das eine Erweiterungsmodul 7a, wobei das Rückkopplungssignal 5 gesetzt wird. Das Modulerkennungs-Byte (Dummy-Byte) 2 enthält in der Regel keine Daten, jedoch bewirkt dieses gleichzeitig, dass das eine Erweiterungsmodul 7a seine Modulkennung in Form des Modulkennungs-Byte 3a an das Basismodul 6 übermittelt und demnach als solches erkannt wird.

Um andere Erweiterungsmodule zu finden, wird vor dem Datenpaket 4 für das eine Erweiterungsmodul 7a ein weiteres Modulerkennungs-Byte (Dummy-Byte) 2 gesendet. Hierauf antwortet das weitere Erweiterungsmodul 7b mit seinem Modulkennungs-Byte 3b. Anhand dieses Verfahrens erkennt das Basismodul 6 mit jedem weiteren Übertragungszyklus zur Kommunikation ein anderes Erweiterungsmodul. Ist kein anderes Erweiterungsmodul angeschlossen, wird statt eines Modulkennungs-Bytes eine Null empfangen; der Aufbau ist somit stabil.

Da das Modulkennungs-Byte 3a,3b nicht durch die Prüfsumme abgesichert wird, besteht dieses aus zwei identischen Halb-Bytes 19,20 (Nibble). Hierbei werden das eine und das weitere Modulkennungs-Byte 3a,3b bzw. die Datenpakete 4,4a,4b mit einer Zusatzinformation zur Erkennung von Übertragungsfehlern gesendet. Um einen einfachen Fehler erkennen zu können, wird abgefragt, ob das erste Halb-Byte 19 mit dem zweiten Halb-Byte 20 identisch ist. Alternativ kann eine derartige Sicherheitsabfrage auch mit einem Paritäts-Bit, z.B. durch das jeweilige achte Bit, erfolgen.

Die Erweiterungsmodule 7a,7b prüfen selbständig bei Empfang eines Bytes das Rückkopplungssignal 5. Ist dieses gesetzt, wird damit der Empfang des letzten Bytes des Datenpaketes 4 und damit das Ende des Übertragungszyklus angezeigt. Werden im laufenden Betrieb Erweiterungsmodule abgezogen oder eingesteckt, wird dies vom Basismodul 6 anhand der empfangenen Modulkennungs-Bytes 3a,3b erkannt und die Ausbauliste geändert. Damit sich die Ausbauliste aufgrund von Störeinflüssen nicht verändert, können Mechanismen, wie z.B. eine Mehrfachabfrage, zur Entprellung eingesetzt werden.

Bei der Überprüfung eines Datenpaketes 4 in den Erweiterungsmodulen 7a,7b wird sowohl die empfangene Modulkennung als auch die Prüfsumme überprüft. Sind beide korrekt, ist das Datenpaket 4 gültig und die Nutzdaten werden übernommen. Sofern das Rückkopplungssignal 5 gesetzt ist, aktualisieren die Erweiterungsmodule 7a,7b zudem die an das Basismodul 6 zu sendenden Daten. Da die Modulkennung mit lediglich einem Halb-Byte (Nibble) 19 bzw. 20 dargestellt wird, stehen maximal 15 (2⁴-1) Modulkennungen zur Verfügung. Werden jedoch zu einem späteren Zeitpunkt weitere Modulkennungen benötigt, so muss eine der 15 vorhandenen Modulkennungen für die gewünschte Erweiterung reserviert werden. Wird diese Modulkennung für die Erweiterung verwendet, ist die eigentliche Modulkennung an der Stelle des vormals ersten Daten-Bytes zu finden.

Um ein Abreißen des zyklischen Datenstroms zu erkennen, wird ferner bei jedem Empfang eines gültigen Datenpaketes 4,4a,4b eine Laufzeitüberwachung (Triggerung eines watch dog timers) gestartet. D.h., dass das eine und das weitere Modulkennungs-Byte 3a,3b bzw. die Datenpakete 4,4a,4b während einer Überwachung zur Erkennung von Laufzeitfehlern gesendet werden. Die Laufzeitüberwachung wird z.B. auf den Wert 200 gesetzt. Jede Millisekunde wird der gesetzte Wert um den Wert 1 dekrementiert. Gelangt dieser innerhalb eines Zeitfensters von 200 ms. auf den Wert Null, so wurde kein gültiges Datenpaket 4, 4a,4b empfangen. Daraufhin wird die Schnittstelle 9a,9b des Systems reinitialisiert. Werden im Anschluss daran nach wie vor keine gültigen Datenpakete 4,4a,4b empfangen, findet keine erneute Initialisierung statt, sondern es wird vielmehr ein externer Fehler, wie beispielsweise eine durchtrennte Leitung oder ein abgezogener Stecker, angenommen.

Wesentliche Systemparameter sind durch eine zyklische Übertragung der Datenpakete 4,4a,4b, einem typischen Datenumfang von 1 bis 4 Byte pro Modul, einer Dynamik der zyklischen Übertragung von 5 bis 15 ms.-Intervallen und bei einer Modulzahl von 1 bis 15 spezifiziert. Darüber hinaus ist zum einen eine sichere Datenübertragung durch eine Selbstüberwachungsfunktion hinsichtlich möglicher Fehler gegeben und zum anderen ist eine Implementierung der Erweiterungsmodule 7a,7b ohne spezielle Steuerungs-/Regelungs-Peripherien (controllerperipherie) möglich.

Die zuvor erläuterte Erfindung kann wie folgt zusammengefasst werden: Um ein kostengünstiges und einfach umsetzbares Verfahren zur seriellen Datenübertragung zwischen einem Basismodul 6 und zumindest einem Erweiterungsmodul 7a und/oder 7b anzugeben, ist vorgesehen, dass im Sinne eines Schieberegisters Informationen zwischen den Modulen 6,7a,7b verschoben werden, so dass neben der einfachen Erkennung der Erweiterungsmodule 7a, 7b auch eine Datenübertragung auf günstige Weise mit einem geringen technischen Aufwand realisiert werden kann. Hierbei wird vorteilhafterweise von einer großen Ausdehnung der aus den Schnittstellen 9a,9b bestehenden Systemschnittstelle profitiert, da kein parallel verdrahteter Bus, sondern eine feste Punkt-zu-Punkt-Verbindung gegeben ist; ohne einen speziellen Treiber kann eine Verbindungslänge von 3 bis 5 m zwischen den einzelnen Modulen 6,7a,7b verwendet werden. Zudem wird durch eine feste Signalflussrichtung auf jeder Leitung 12a bis 15b eine hohe EMV-Festigkeit erreicht.

## Patentansprüche

1. Verfahren zur seriellen Datenübertragung zwischen einem Basismodul (6) und einem Erweiterungsmodul (7a) und zumindest einem in Serie mit diesem Erweiterungsmodul verbundenen weiteren Erweiterungsmodul (7b) mit folgenden Verfahrensschritten:
**aa)** in einem Übertragungszyklus wird von dem Basismodul (6) ein Modulerkennungs-Byte (2) an das eine Erweiterungsmodul (7a) und von diesem ein Modulkennungs-Byte (3a) im Sinne eines Schieberegisters an das Basismodul (6) gesendet;
**ab)** durch ein Rückkopplungssignal (5) wird von dem Basismodul (6) an das eine Erweiterungsmodul (7a) das Ende des einen Übertragungszyklus übermittelt;
**dadurch gekennzeichnet, dass**
**ba)** in einem weiteren Übertragungszyklus, von dem Basismodul (6) ein weiteres Modulerkennungs-Byte (2)an das weitere Erweiterungsmodul (7b) gesendet wird und von diesem ein weiteres Modulkennungs-Byte (3b) im Sinne eines Schieberegisters an das Basismodul (6) gesendet wird, wobei auch Datenpakete (4) von dem Basismodul (6) an das eine Erweiterungsmodul (7a) und umgekehrt übertragen werden;
**bb)** durch ein weiteres Rückkopplungssignal (5a) und von dem Basismodul (6) an das eine Erweiterungsmodul (7a) und von diesem an das weitere Erweiterungsmodul (7b) das Ende des weiteren Übertragungszyklus übermittelt wird.

2. Verfahren nach einem der vorhergehenden Ansprüche mit folgendem Verfahrensschritt:
- in dem einen bzw. dem anderen Übertragungszyklus werden die Datenpakete (4) von dem Basismodul (6) an das eine bzw. an das weitere Erweiterungsmodul (7a bzw. 7b)in einer invertierten Reihenfolge zu den Datenpaketen (4a,4b) von dem einen bzw. dem weiteren Erweiterungsmodul (7a bzw. 7b) an das Basismodul (6) gesendet.

3. Verfahren nach einem der vorhergehenden Ansprüche mit folgendem Verfahrensschritt:
- das eine und das weitere Modulkennungs-Byte (3a,3b) bzw. die Datenpakete (4,4a,4b) werden mit einer Zusatzinformation zur Erkennung von Übertragungsfehlern gesendet.

4. Verfahren nach einem der vorhergehenden Ansprüche mit folgendem Verfahrensschritt:
- das eine und das weitere Modulkennungs-Byte (3a,3b) bzw. die Datenpakete (4,4a,4b) werden während ihrer Übermittlung hinsichtlich Laufzeitfehler überwacht.

5. Vorrichtung (1), die zur Durchführung des Verfahrens nach zumindest einem der vorhergehenden Ansprüche ausgebildet ist und das Basismodul (6) und das zumindest eine Erweiterungsmodul (7a und/oder 7b) umfasst,
- mit einer das Basismodul (6) und zumindest das eine Erweiterungsmodul (7a und/oder 7b) in Serie verbindenden Schnittstelle (9a und/oder 9b), mit einer Sendeleitung (12a,12b) und einer Empfangsleitung (13a bzw. 13b) zur Übertragung von Modulkennungs-Bytes (3a,3b), Modulerkennungs-Bytes (2) sowie Datenpaketen (4,4a,4b), und mit einer Taktleitung (14a bzw. 14b) zur Übertragung der Zyklen sowie einer Steuerleitung (15a bzw. 15b) zur Übertragung des Rückkopplungssignals (5,5a,5b) der Datenübernahme.

6. Vorrichtung (1) nach Anspruch 5,
- mit einer Anordnung der einen Schnittstelle (9a) zwischen dem Basismodul (6) und dem einen Erweiterungsmodul (7a) und einer weiteren Schnittstelle (9b) zwischen dem einen Erweiterungsmodul (7a) und dem weiteren Erweiterungsmodul (7b).

7. Vorrichtung (1) nach Anspruch 5 oder 6,
- mit jeweils einem integrierten Schaltkreis (8, 8a, 8b) bzw. Prozessor je Basismodul (6) und Erweiterungsmodul (7a, 7b).

## Claims

1. Method for serial data transfer between a base module (6) and an expansion module (7a) and at least one further expansion module (7b) connected in series with this expansion module having the following method steps:
**aa)** in one transfer cycle the base module (6) sends a module detection byte (2) to the one expansion module (7a) and said expansion module (7a) sends a module detection byte (3a) in the sense of a shift register to the base module (6);
**ab)** the end of the one transfer cycle is transmitted by a feedback signal (5) from the base module (6) to the one expansion module (7a);
**characterised in that**
**ba)** in a further transfer cycle, the base module (6) sends a further module detection byte (2) to the further expansion module (7b) and a further module detection byte (3b) in the sense of a shift register to the base module (6), wherein data packets (4) are also transferred from the base module (6) to the one expansion module (7a) and vice versa;
**bb)** the end of the further transfer cycle is transmitted by a further feedback signal (5a) and from the base module (6) to the one expansion module (7a) and to the further expansion module (7b).

2. Method according to one of the preceding claims with the following method step:
- in the one or the other transfer cycle, the data packets (4) from the base module (6) to the one or the further expansion module (7a or 7b) are sent in an inverted sequence from that of the data packets (4a, 4b) from the one or the further expansion module (7a or 7b) to the base module (6).

3. Method according to one of the preceding claims with the following method step:
- the one and the further module detection byte (3a, 3b) or the data packets (4, 4a, 4b) are sent with additional information to detect transfer errors.

4. Method according to one of the preceding claims with the following method step:
- the one and the further module detection byte (3a, 3b) or the data packets (4, 4a, 4b) are monitored for runtime errors during their transmission.

5. Device (1) which is embodied to perform the method according to at least one of the preceding claims and comprises the base module (6) and the at least one expansion module (7a, and/or 7b),
- having an interface (9a and/or 9b) connecting the base module (6) and at least the one expansion module (7a and/or 7b) in series, having a transmit line (12a, 12b) and a receive line (13a or 13b) for transferring module detection bytes (3a, 3b), module detection bytes (2) and data packets (4, 4a, 4b) and having a clock line (14a or 14b) for transferring the cycles and a control line (15a or 15b) for transferring the feedback signal (5, 5a, 5b) of the data migration.

6. Device (1) according to claim 5,
- having an arrangement of one interface (9a) between the base module (6) and the one expansion module (7a) and a further interface (9b) between the one expansion module (7a) and the further expansion module (7b).

7. Device (1) according to claim 5 or 6,
- having respectively one integrated circuit (8, 8a, 8b) or processor per base module (6) and expansion module (7a, 7b).

## Revendications

1. Procédé de transfert série de données entre un module ( 6 ) de base et un module ( 7a ) d'extension et au moins un autre module ( 7b ) d'extension monté en série avec ce module d'extension, comprenant les stades de procédé suivantes :
aa) dans un cycle de transfert, on envoie du module ( 6 ) de base un octet ( 2 ) de reconnaissance de module au un module ( 7a ) d'extension et de celui-ci au module ( 6 ) de base un octet ( 3 ) de reconnaissance de module au sens d'un registre à décalage ;
ab) par un signal ( 5 ) de réaction, on transmet la fin d'un cycle de transfert du module ( 6 ) de base au un module ( 7a ) d'extension ;
**caractérisé en ce que**
ba) dans un autre cycle de transfert, on envoie un autre octet ( 2 ) de reconnaissance de module du module ( 6 ) de base à l'autre module ( 7b ) d'extension et on envoie de celui-ci au module ( 6 ) de base un autre octet ( 3b ) de reconnaissance de module au sens d'un registre à décalage, dans lequel on transfère également des paquets ( 4 ) de données du module ( 6 ) de base au un module ( 7a ) d'extension et inversement ;
bb) par un autre signal ( 5a ) de réaction, on transmet du module ( 6 ) de base au un module ( 7a ) d'extension et de celui-ci à l'autre module ( 7b ) d'extension la fin de l'autre cycle de transfert.

2. Procédé suivant l'une des revendications précédentes, comprenant le stade de procédé suivant :
- dans le un cycle de transfert ou dans l'autre cycle de transfert, on envoie les paquets ( 4 ) de données du module ( 6 ) de base au un module ou à l'autre module ( 7a ou 7b ) d'extension dans un ordre inversé par rapport au paquet ( 4a, 4b ) de données du un module d'extension ou de l'autre module ( 7a ou 7b ) d'extension au module ( 6 ) de base.

3. Procédé suivant l'une des revendications précédentes, comprenant le stade de procédé suivant :
- le un octet ou l'autre octet ( 3a, 3b ) de reconnaissance de module ou les paquets ( 4a, 4b ) de données avec une information supplémentaire pour reconnaître des erreurs de transfert.

4. Procédé suivant l'une des revendications précédentes, comprenant le stade de procédé suivant :
- on contrôle le un octet de reconnaissance de module et l'autre octet ( 3a, 3b ) de reconnaissance de module ou les paquets ( 4a, 4b ) de données pendant leur transfert en ce qui concerne une erreur de temps de parcours.

5. Dispositif ( 1 ) constitué pour effectuer le procédé suivant au moins l'une des revendications précédentes et comprenant le module ( 6 ) de base et le au moins un module ( 7a et/ou 7b ) d'extension,
- comprenant une interface ( 9a et/ou 9b ) reliant en série le module ( 6 ) de base et au moins le un module ( 7a et/ou 7b ) d'extension, une ligne ( 12a, 12b ) d'émission et une ligne ( 13a ou 13b ) de réception pour le transfert d'octet ( 3a, 3b ) de reconnaissance de module, d'octet ( 2 ) de reconnaissance de module, ainsi que des paquets ( 4, 4a, 4b ) de données, et une ligne ( 14a ou 14b ) d'horloge pour le transfert des cycles, ainsi qu'une ligne ( 15a ou 15b ) de commande pour le transfert du signal ( 5, 5a, 5b ) de réaction de la prise en charge de données.

6. Dispositif ( 1 ) suivant la revendication 5,
- comprenant un agencement d'une interface ( 9a ) entre le module ( 6 ) de base et le un module ( 7a ) d'extension et une autre interface ( 9b ) entre le un module ( 7a ) d'extension et l'autre module ( 7b ) d'extension.

7. Dispositif ( 1 ) suivant la revendication 5 ou 6,
- comprenant respectivement un circuit ( 8, 8a, 8b ) intégré ou un processeur pour chaque module ( 6 ) de base et module ( 7a, 7b ) d'extension.
